Europäisches Patentamt

European Patent Office

Office européen des brevets

(11) Publication number: **0 466 252 A2**

# EUROPEAN PATENT APPLICATION

(21) Application number: **91201704.3**

(22) Date of filing: **02.07.91**

(51) Int. Cl.⁵: **G06F 15/336**

(30) Priority: **03.07.90 US 548287**

(43) Date of publication of application:
**15.01.92 Bulletin 92/03**

(84) Designated Contracting States:
**AT BE CH DE DK ES FR GB GR IT LI LU NL SE**

(71) Applicant: **THE RESEARCH FOUNDATION OF STATE UNIVERSITY OF NEW YORK**
**P.O. Box 9**
**Albany, New York 12201-0009(US)**

(72) Inventor: **Subbarao, Muralidhara**
**23 University Drive**
**Port Jefferson Station, New York(US)**

(74) Representative: **Smulders, Theodorus A.H.J., Ir. et al**
**Vereenigde Octrooibureaux, Nieuwe Parklaan 97**
**NL-2587 BN Den Haag(NL)**

(54) **A method and apparatus for restoring convolution degraded images and signals.**

(57) Apparatus and method are described for restoring convolution degraded signals such as blurred images produced by defocused cameras and moving objects. The degraded signal is first processed by a noise reduction means to reduce noise. Then various derivatives of the degraded signal are computed. Each derivative thus computed is multiplied by a corresponding weight parameter to give a weighted derivative. All the weighted derivatives are then summed to obtain a restored signal. The weight parameters themselves are computed based on the moments of the convolution kernel.

The apparatus of the present invention comprises a noise reduction means, a weight parameter computation means, a multiplication means, and a summation means.

The computations involved in the method of the present invention are local in nature and do not involve computing Fourier transforms. Hence the method and the apparatus of the present invention are efficient and less expensive than conventional methods and apparatuses.

EP 0 466 252 A2

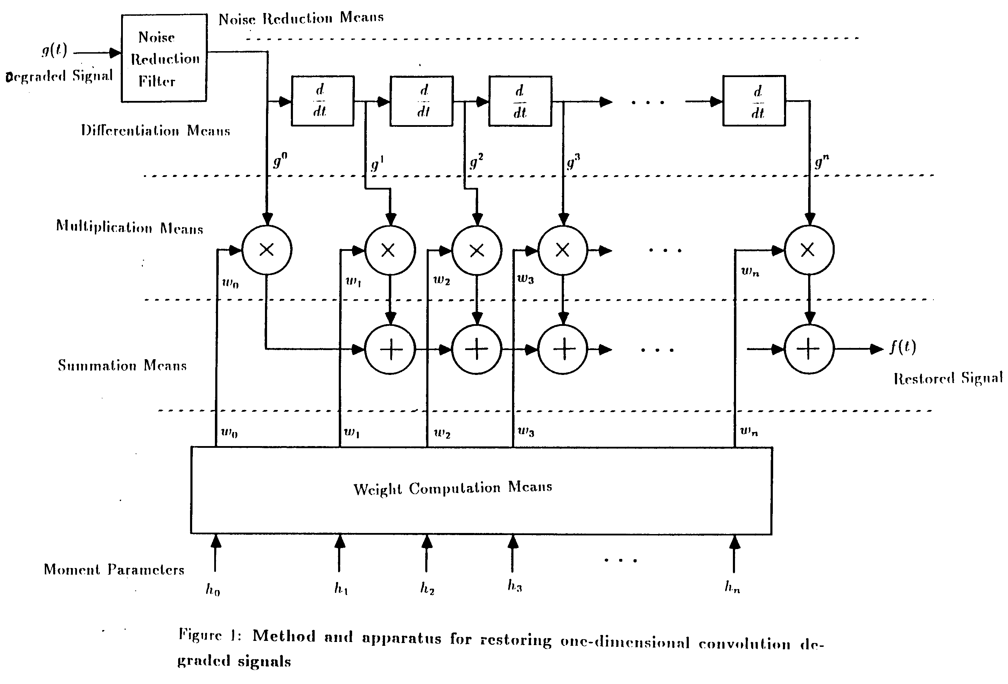

Figure 1: Method and apparatus for restoring one-dimensional convolution degraded signals

## 1 Field of Invention

The present invention relates to a method and apparatus for restoring signals degraded by a convolution process. In particular, the method is also relevant to restoring defocused images to obtain focused images. The method employs a new signal processing technique for deconvolution.

## 2 Description of Prior Art

Restoration of signals degraded by a convolution process finds applications in many areas of signal processing. For example, in image processing, the blurred image of an object can be restored to obtain a focused image of the object. The blurring may be due to camera misfocus, relative motion between the camera and the object (as when the camera shakes or the object is moving), aberration of the optical system, and atmospheric turbulence in the case of aerial and satellite images.

The method of restoring a convolution degraded signal is the same for any dimensionality of the signal. For example, the method is same for one-dimensional speech signals, two-dimensional image signals, three-dimensional time-varying image signals (e.g. TV image sequence) etc. Therefore, for the sake of convenience, the method of the present invention is first described in detail for one-dimensional signals. The generalizations of the method to restore two-dimensional and multi-dimensional signals are described briefly later.

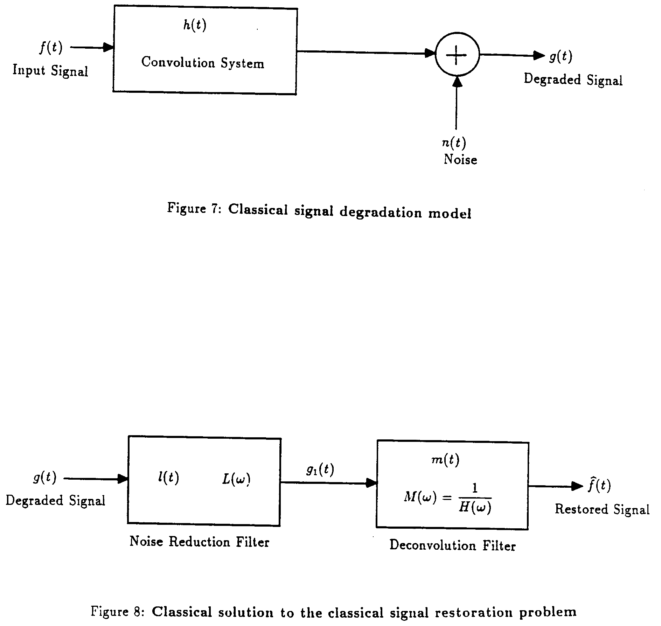

The classical signal degradation model includes degradation due to both a convolution process and a noise process. Figure 7 illustrates this model. This model for the case of one-dimensional signals can be defined by

$$g(t) = h(t) * f(t) + n(t) \qquad (1)$$

where $t$ denotes an independent one-dimensional variable which will be referred to as time, $f(t)$ denotes the original uncorrupted signal, $h(t)$ denotes the convolution kernel which is also referred to as *the impulse response function,* $n(t)$ denotes additive noise, $*$ denotes the convolution operation, and $g(t)$ denotes the degraded signal. The impulse response function $h(t)$ satisfies the condition

$$\int_{-\infty}^{\infty} h(t)dt = A \qquad (2)$$

where $A$ is a constant (usually equal to 1).

The problem of signal restoration is to estimate the original signal $f(t)$ given the corrupted signal $g(t)$ and some *a priori* information about both noise $n(t)$ and the impulse response function $h(t)$.

Convolution operation in the time domain corresponds to multiplication operation in the Fourier domain. Therefore, denoting the Fourier frequency variable by $\omega$ and the Fourier transforms of $g(t)$, $h(t)$, $f(t)$ and $n(t)$ by $G(\omega)$, $H(\omega)$, $F(\omega)$ and $N(\omega)$ respectively the signal degradation model in equation (1) can be written in the Fourier domain as

$$G(\omega) = H(\omega)F(\omega) + N(\omega). \qquad (3)$$

The classical solution to the classical signal restoration problem can be presented as a two step process. Figure 8 illustrates this two step process. The first step is a *noise reduction step* where the degraded signal $g(t)$ is passed through a convolution filter which will be referred to as *noise reduction filter.* The impulse response function of the noise reduction filter will be denoted by $l(t)$ and its Fourier transform by $L(\omega)$ which is also referred to as the *transfer function* of the noise reduction filter. The output of the noise reduction filter will be denoted by $g_1(t)$ and its Fourier transform by $G_1(\omega)$. Now the first step of the classical solution to the restoration problem can be summarized as

$$G_1(\omega) = L(\omega)G(\omega) = L(\omega)H(\omega)F(\omega) + L(\omega)N(\omega). \qquad (4)$$

The second step of the classical solution can be termed as the *inverse filtering step* or *deconvolution step*. In this step, the output $g_1(t)$ of the noise reduction filter is passed through another convolution filter which will be referred to as the *deconvolution* filter. The impulse response function of the deconvolution filter will be denoted by $m(t)$ and its Fourier transform by $M(\omega)$. The effect of this filter is to undo the degradation of the original signal $f(t)$ resulting from the convolution with the convolution kernel $h(t)$. Hence the name *deconvolution filter*. In the Fourier domain, $M(\omega)$ is the inverse of $H(\omega)$, i.e.

$$M(\omega) = \frac{1}{H(\omega)}. \qquad (5)$$

The output of the second step will be denoted by $\widehat{f}(t)$ and its Fourier transform by $\widehat{F}(\omega)$. Now, the deconvolution step can be summarized as

$$\begin{aligned}
\widehat{F}(\omega) &= M(\omega)\, G_1(\omega) \\
&= M(\omega)L(\omega)H(\omega)F(\omega) + M(\omega)L(\omega)N(\omega) \\
&= L(\omega)F(\omega) + M(\omega)L(\omega)N(\omega). \qquad (6)
\end{aligned}$$

The output $\widehat{f}(t)$ of the deconvolution step is the estimate obtained for the original input signal $f(t)$.

There are many variations on this basic technique for signal restoration. One well known technique is the *least square filter* or the *Wiener filter* approach. In this approach, the characteristics of the noise reduction filter $L(\omega)$ depends on the signal to noise ratio. It is given by

$$L(\omega) = \frac{|H(\omega)|^2}{|H(\omega)|^2 + \Gamma(\omega)} \qquad (7)$$

where $\Gamma(\omega)$ is the noise to signal power density ratio defined as

$$\Gamma(\omega) = \frac{|N(\omega)|^2}{|F(\omega)|^2}. \qquad (8)$$

More details on the classical techniques for signal restoration, and other approaches which are variations on the basic technique described above can be found in many books. For example, see Chapter 7, *Restoration*, in the book *Digital Picture Processing*, second edition, by A. Rosenfeld and A. C. Kak, Academic Press, 1982, and also Chapter 8, *Image Filtering and Restoration*, in the book *Fundamentals of Digital Image Processing*, by A. K. Jain, Prentice Hall, 1989.

The classical signal restoration technique outlined above has many serious deficiencies. One important deficiency is that the output of the restoration is very sensitive to the exact form of the convolution kernel $h(t)$ and therefore significant information about the convolution kernel $h(t)$ is needed to construct the deconvolution filter. As stated earlier, the transfer function $M(\omega)$ of the deconvolution filter is determined from $H(\omega)$ as

$$M(\omega) = \frac{1}{H(\omega)}.$$

In many applications, sufficient knowledge about the function $H(\omega)$ will not be available to determine the deconvolution filter specified by $M(\omega)$. For example, in the case of a defocused camera system, the convolution kernel is a very complicated function. (For a discussion of this topic, see Section 8.8 in *Principles of Optics* by M. Born and E. Wolf, Pergamon Press, 1980, and also *On the depth information in the point spread function of a defocused optical system*, Technical Report 90.02.07 written by this inventor, Computer Vision Laboratory, Department of Electrical Engineering, State University of New York, Stony Brook, NY 11794-2350, Feb. 7,1990). Therefore, an approximation to the convolution kernel will have to be used. However, because the output of the restoration is very sensitive to the exact shape of the convolution kernel, such approximations could give results which are highly erroneous. In summary, this technique does not provide a clear and systematic way to ignore precise shape of the convolution kernel $h(t)$ and use global statistical properties of the convolution kernel such as its moment parameters.

A second important deficiency of the classical restoration technique is the specification of the deconvolution filter in the Fourier domain and the possible implementation of the method by computing the Fourier transform of the degraded signals. The Fourier transform $G(\omega)$ of any signal $g(t)$ at any point $\omega$ depends on the entire signal $g(t)$ for $-\infty < t < \infty$. Therefore, in practice, one has to perform a windowing operation, i.e. multiply the signal by a window function having a non-zero value in a finite interval, to compute the Fourier transform of the signal before restoring it. This introduces an undesirable distortion of the Fourier transform $G(\omega)$. As a result, the restored signal $\hat{f}(t)$ is also distorted.

Another deficiency of the classical restoration technique is the high computational complexity of computing the Fourier transform of a signal. A further deficiency of the classical restoration technique is that it is difficult to adapt the technique to a case where the convolution kernel $h(t)$ gradually changes with time $t$. It is also not straightforward to adapt the classical technique to a case where the characteristics of the noise $n(t)$ gradually changes with time.

## 3 Summary of the Invention

An object of the present invention is a method for restoring a convolution degraded signal in a robust manner using only global statistical properties such as the moments of the convolution kernel, and not requiring information about the exact shape of the convolution kernel.

Another object of the present invention is to provide a method of restoring convolution degraded signals, wherein the quality of the restoration can be improved in a gradual manner as more and more information is added about the global properties of the convolution kernel such as its moments.

Another object of the present invention is a method of restoring a convolution degraded signal wherein the value of the restored signal at any point is computed using only those values of the degraded signal which lie within a small interval containing the point. Thus the computation is *local* in nature, and therefore is efficient.

A further object of the present invention is to provide a method for restoring convolution degraded signals which can be easily adapted to a case wherein the characteristics of the convolution kernel and also the characteristics of the noise changes gradually with time. Another object of the present invention is to provide an efficient, simple, and cost effective apparatus for implementing the method of the present invention.

The present invention provides a method for restoring a degraded signal which is the result of convolving an original signal with a convolution kernel. The convolution kernel is also referred to as the impulse response function. The impulse response function is characterized by a set of moment parameters which specify global properties of the impulse response function. The method of the present invention involves the steps outlined below.

First, a set of derivative signals is computed by taking derivatives of the degraded signal. Then, based on the values of the moment parameters of the impulse response function, a weight parameter is computed corresponding to each member of the set of derivative signals. Next, each member of the set of derivative signals is multiplied with its corresponding weight parameter to obtain a set of weighted derivatives. Finally, at least two members of the set of weighted derivatives are summed together to obtain a restored signal. Thus, an estimate of the original signal is obtained from a degraded signal.

If the degraded signal is corrupted by noise, then an additional noise reduction step is added to the restoration method outlined above. The degraded signal can be passed through a noise reduction filter before proceeding to compute the set of derivative signals.

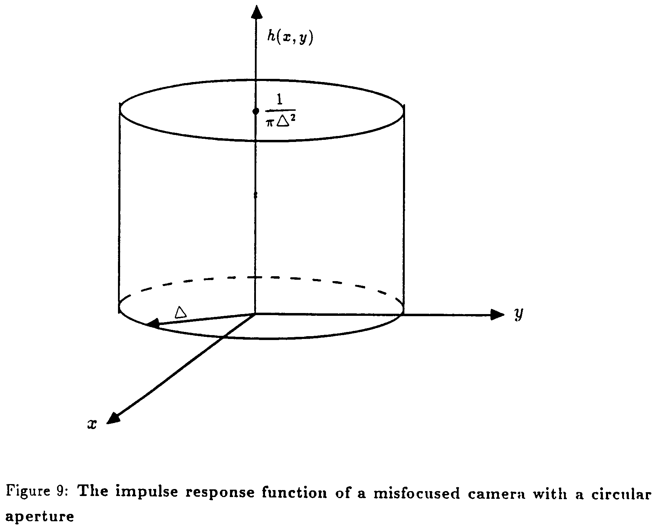

If the degraded signal is a two-dimensional image (e.g. television or a video picture signal), then the above restoration method can be used to obtain focused images from blurred images. The blur may have been due to either a misfocusing of the video camera or due to some other convolution degradation process. In the case of a misfocused camera, according to geometric optics, the impulse response function is a constant inside a region of specified shape and is zero outside the region. The shape of the region is the same as that of the shape of the aperture of the camera, except for a magnification factor. For a circular aperture, the impulse response function is called a *blur circle* and it has a cylindrical or pill-box shape as shown in Figure 9. The impulse response function of a camera is also referred to as the *point spread function* of the camera.

The method of the present invention can be used to restore signals of any dimensionality. In particular, it can be used for one-dimensional signals (e.g. speech signals) also. The method of the present invention can be used for both analog signals and digital signals. In both cases, the signal can be of any dimensionality. In particular, it is useful for restoring analog speech signals, digital speech signals, analog image signals, and digital image signals.

The apparatus of the present invention comprises the following :

(*i*) a differentiation means for computing derivatives of the degraded signal to obtain a set of derivative signals;

(*ii*) a weight computation means for taking the values of the moment parameters of the impulse response function as input and based on these values, computing a weight parameter corresponding to each member of the set of derivative signals;

(*iii*) a multiplication means for multiplying each member of the set of derivative signals with its corresponding weight parameter to obtain a set of weighted derivatives; and

(*iv*) a summation means for summing at least two members of the set of weighted derivatives to obtain a restored signal.

The apparatus of the present invention may be implemented using electronic devices. The electronic devices can be either analog devices such as analog computers and filters, or digital devices such as digital computers and filters, or a combination of both analog and digital devices including analog computers, digital computers, analog filters, and digital filters. The apparatus of the present invention may additionally include a noise reduction means for reducing the effects of noise on the restored signal.

## 4 Brief Description of the Drawings

For a further understanding of the method and apparatus of the present invention, reference is made to the following drawings.

Fig. 1 is a schematic diagram showing the method and apparatus for restoring one-dimensional convolution degraded signals for a general case.

Fig. 2 illustrates a particular example of the method and apparatus for restoring one-dimensional convolution degraded signals.

Fig. 3 shows an analog differentiation unit implemented by electronic circuitry.

Fig. 4 shows a digital differentiation unit.

Fig. 5 illustrates a particular example of implementing the restoration scheme of the present invention for two-dimensional signals.

Fig. 6 is a schematic diagram showing the method and apparatus for restoring multi-dimensional convolution degraded signals.

Fig. 7 is a block diagram illustrating the classical signal degradation model.

Fig. 8 illustrates the classical solution to the classical signal restoration problem.

Fig. 9 shows the impulse response function of a misfocused camera with a circular aperture.

## 5 Detailed Description of the Preferred Embodiments

The application of the present invention will be described first for one-dimensional signals, and later for two-dimensional and multi-dimensional signals. In all cases, the signal degradation model is the same as the classical degradation model explained earlier.

### 5.1 Restoration of One-dimensional Signals

In the preferred embodiment of the present invention, the degraded signal $g(t)$ is first passed through a noise reduction filter to minimize the effect of noise. This noise reduction step is similar to the first step of the classical solution explained earlier for signal restoration. This step is carried out using one of the well-known techniques for local smoothing of signals such as those described in *Smoothed Differentiation Filters for Images*, P. Meer and I. Weiss, Technical Report CAR-TR-424, Center for Automation Research, University of Maryland, College Park, MD 20742-3411. The noise reduction step need not be a distinct step in practice and it can be carried out simultaneously in combination with other steps. Therefore, for the sake of notational simplicity, the output of the noise reduction step will also be denoted by $g(t)$. After the noise reduction step, the degradation in the signal $g(t)$ is predominantly due to convolution of the original signal $f(t)$ with the impulse response function $h(t)$. This fact is expressed by the equation:

$$g(t) \; = \; h(t) * f(t) \qquad (9)$$

where * represents the convolution operation. This same equation can be written in expanded form as

$$g(t) = \int_{-\infty}^{\infty} f(t-\tau)h(\tau)d\tau. \qquad (10)$$

The $n$th *moment* of the impulse response function $h(t)$ is denoted by $h_n$ and is defined by

$$h_n = \int_{-\infty}^{\infty} t^n h(t)dt. \qquad (11)$$

The original signal $f(t)$ will be taken to be smooth so that it can be expanded in a Taylor series. The Taylor series expansion of $f(t - \tau)$ around the point $t$ is

$$f(t-\tau) = \sum_{n=0}^{\infty} \frac{(-\tau)^n}{n!} f^n \qquad (12)$$

where

$$f^n = \frac{d^n f(t)}{dt^n}. \qquad (13)$$

Substituting for $f(t - \tau)$ from equation (12) into the convolution equation (10), and using equation (11), we obtain

$$g(t) = \sum_{n=0}^{\infty} \frac{(-1)^n}{n!} h_n f^n. \qquad (14)$$

The equation above will be referred to as *convolution formula*. This formula expresses the convolution of two functions $f(t)$ and $h(t)$ in terms of the moments of one function $h(t)$ and the derivatives of the other function $f(t)$. This convolution formula is derived in the book *Systems and Transforms with Applications in Optics* by A. Papoulis, McGraw Hill Book Company, 1968 (reprinted in 1986 by Robert E. Kreiger Publishing Company), page 31. (This formula was also derived independently by this inventor in 1989).

If the impulse response function is time-limited, i.e. $|h(t)| = 0$ for $t > T$ for some constant T, then the convolution formula can be shown to converge rapidly. This is indeed the case in many practical applications (e.g. a misfocused camera). Therefore the right hand side of the convolution formula (i.e. equation (14)) can be truncated by neglecting the $(N + 1)$th and higher order derivatives of the original signal $f(t)$ for some $N$, that is, the approximation $f^n(x) = 0$ for $n > N$ can be used. With this approximation, the convolution formula can be written as

$$g^0 = \sum_{n=0}^{N} \frac{(-1)^n}{n!} h_n f^n \qquad (15)$$

where $g^0 = g(t)$. The truncated convolution equation (15) can be written in the form

$$g^0 = h_0 f^0 + \sum_{n=1}^{N} \frac{(-1)^n}{n!} h_n f^n. \qquad (16)$$

7

Rearranging terms in the above equation, we obtain

$$f^0 = \frac{1}{h_0}\left[g^0 - \sum_{n=1}^{N}\frac{(-1)^n}{n!}h_n f^n\right] \qquad (17)$$

where $f^0 = f(x)$.

Taking the $m$th order derivative on either side of equation (17), and noting that $f^{m+n} = 0$ for $m + n > N$, we obtain

$$f^m = \frac{1}{h_0}\left[g^m - \sum_{n=1}^{N-m}\frac{(-1)^n}{n!}h_n f^{n+m}\right] \qquad (18)$$

for $m = 0,1,2,..., N - 1$, where

$$g^m = \frac{d^m}{dt^m}g(t). \qquad (19)$$

The goal of the present invention is to estimate the original signal $f^0 = f(x)$ in equation (17) from the degraded signal $g(t)$.

Equation (18) expresses the $m$th order derivative $f^m$ of the original signal $f(t)$ in terms of the $m$th order derivative of the degraded signal $g(t)$, and the $(m + 1)$th and higher order derivatives $f^{m+n}$ of the original signal $f(t)$. Therefore, equation (18) can be used to substitute for the term $f^n$ in equation (17). In the resulting equation, the term $f^{m+n}$ can be replaced again by an expression involving $(m + n + 1)$th and higher order derivatives of $f(t)$. Carrying out this substitution procedure repeatedly in a recursive manner (always noting that $f^n = 0$ for $n > N$), the right hand side of equation (17) can be expressed only in terms of $g(t)$ and the derivatives of $g(t)$. In the final resulting expression, the terms can be rearranged to obtain an equation of the form

$$f(t) = \sum_{n=0}^{N} w_n g^n \qquad (20)$$

where $w_n$ for $n = 0,1,..., N$ are weight parameters dependent on the moment parameters $h_n$. Therefore, the method of the present invention consists of first computing the derivatives $g^n$ for $n = 0,1,..., N$, then computing all the weight parameters $w_n$ using the moment parameters $h_n$ for $n = 0,1,..., N$, and then computing the right hand side of equation (20). The apparatus for implementing this method is shown in Figure 1.

Equation (20) is a new deconvolution formula which is unknown in prior art. The derivatives of the degraded signal $g^n$ can be computed by *local operations*, i.e. the derivative at a point $t$ can be computed using the values of the signal $g(t)$ in a small interval around $t$ such as $(t - \epsilon, t + \epsilon)$ where $\epsilon$ is a very small positive number; in particular, it is not necessary to know the values of the signal $g(t)$ in a very large interval as is the case in prior art because prior art is based on deconvolution in the Fourier domain. Because of the local nature of operations required by the above deconvolution formula, the amount of computation is lesser. Another important advantage of the above deconvolution formula is that the weights $w_n$ are given by algebraic expressions involving the moments $h_n$ of the impulse response function. The moments $h_n$ specify the *global* or overall characteristics of the impulse response function. In practice, such global characteristics can be estimated more robustly than the actual shape of the impulse response function. In contrast, prior art requires knowledge of the actual shape of the impulse response function. Accurate knowledge of the shape of the impulse response function is difficult to obtain in practice.

**5.2 Example**

The method of the present invention will be illustrated with a simple example. Taking all $3^{rd}$ and higher order derivatives of $f(t)$ to be zero, we get $N = 2$. Therefore, setting $N = 2$ in equation (17) we obtain

$$f^0 = \frac{1}{h_0}\left[g^0 + h_1 f^1 - \frac{1}{2!}h_2 f^2\right].\qquad(21)$$

From equation (18) we obtain the following equations for $f^1$ and $f^2$ which appear on the right hand side of equation (21):

$$f^1 = \frac{1}{h_0}(g^1 + h_1 f^2)\qquad(22)$$

$$f^2 = \frac{1}{h_0}g^2.\qquad(23)$$

Substituting for $f^2$ from equation (23) into equation (22), we obtain

$$f^1 = \frac{1}{h_0}\left(g^1 + \frac{h_1}{h_0}g^2\right).\qquad(24)$$

Substituting for $f^1$ and $f^2$ from equations (24) and (23) respectively into equation (21), we obtain

$$f^0 = \frac{1}{h_0}\left(g^0 + \frac{h_1}{h_0}\left[g^1 + \frac{h_1}{h_0}g^2\right] - \frac{1}{2}\frac{h_2}{h_0}g^2\right).\qquad(25)$$

Rearranging terms in equation (25), we obtain

$$f^0 = w_0 g^0 + w_1 g^1 + w_2 g^2\qquad(26)$$

where

$$w_0 = \frac{1}{h_0}, \quad w_1 = \frac{h_1}{h_0^2}, \quad \text{and} \quad w_2 = \left(\frac{h_1^2}{h_0^3} - \frac{1}{2}\frac{h_2}{h_0^2}\right).\qquad(27)$$

Equation (26) is similar to equation (20) where $N = 2$. Thus, in equation (26) we see that an estimate of the original signal $f^0 = f(t)$ has been obtained by taking a weighted sum of the derivatives of the degraded signal. The weights depend on the moments of the impulse response function $h(t)$. These moments are known; hence the weights can be computed. Therefore, for this example, the method of signal restoration can be summarized as follows.

1. Pass the degraded signal through a noise reduction filter to reduce the effects of noise.

2. Compute the zeroth ($g^0$), first ($g^1$), and second ($g^2$) derivatives of the degraded signal $g(t)$ to obtain the set of derivative signals $\{g^0, g^1, g^2\}$ where $g^0 = g(t)$,

$$g^1 = \frac{dg(t)}{dt},$$

and

$$g^2 = \frac{d^2 g(t)}{dt^2}.$$

3. Using the set of moment parameters $\{h_0,h_1,h_2\}$, compute the weight parameters corresponding to each member of the set of derivative signals $\{g^0,g^1,g^2\}$; i.e., compute $w_0$ corresponding to $g^0$, $w_1$ corresponding to $g^1$, and $w_2$ corresponding to $g^2$, where

$$w_0 = \frac{1}{h_0}, \; w_1 = \frac{h_1}{h_0^2}, \text{ and } w_2 = \left(\frac{h_1^2}{h_0^3} - \frac{1}{2}\frac{h_2}{h_0^2}\right).$$

4. Multiply each member of the set of derivative signals $\{g^0,g^1,g^2\}$ with its corresponding weight parameter, i.e. multiply $g^0$ with $w_0$, $g^1$ with $w_1$, and $g^2$ with $w_2$, to obtain the set of weighted derivatives $\{w_0 g^0, w_1 g^1, w_2 g^2\}$.

5. Sum or add at least two members of the set of weighted derivatives to obtain a restored signal which is an estimate of the original signal $f^0 = f(t)$; for example.

$$f^0 = w_0 g^0 + w_1 g^1 + w_2 g^2, \text{ or } \quad (28)$$

$$f^0 = w_0 g^0 + w_2 g^2.$$

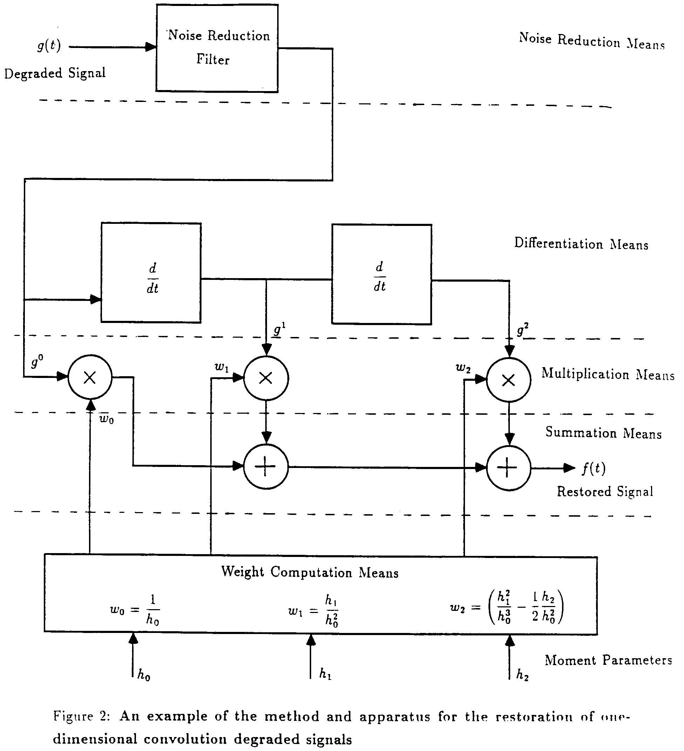

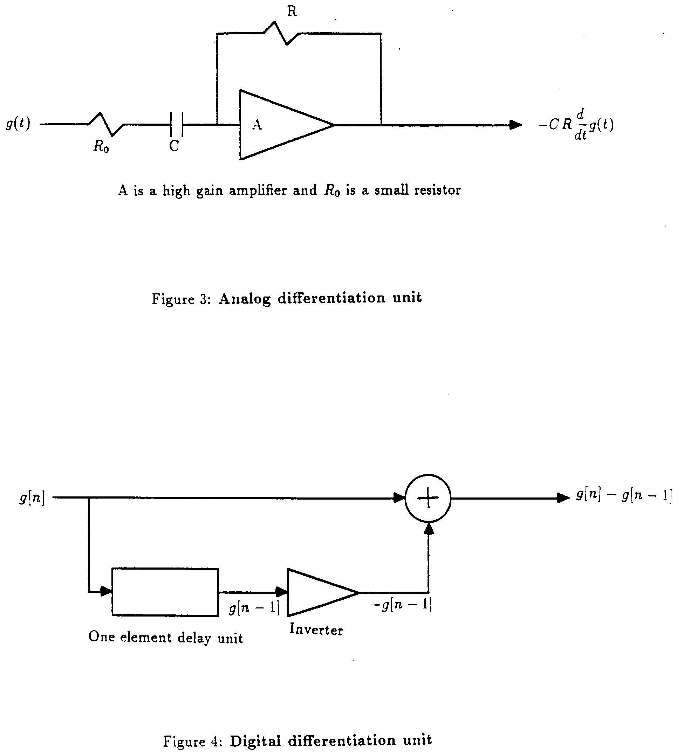

The apparatus for implementing equation (28) is shown in Figure 2. This apparatus is a special case of the more general apparatus shown in Figure 1. It comprises a noise reduction means, a differentiation means, a summation means, and a weight computation means. This apparatus may be implemented using electronic circuitry. In particular, it may be implemented using an analog computer, or a digital computer, or a combination of both analog and digital computers. Figure 3 shows a single differentiation unit implemented using analog electronic circuit. Figure 4 also shows a single differentiation unit but implemented using digital electronic circuit. The differentiation means in Figure 1 consists of many such single differentiation units.

One important type of convolution degradation is the case when the convolution kernel is symmetric about the origin, i.e. $h(t) = h(-t)$. In this case, it can be shown that all odd moments of $h(t)$ are zero, i.e. $h_{2i+1} = 0$ for $i = 0,1,2,....$ Consequently, the amount of computation reduces significantly. Another type of convolution degradation is the case when the convolution kernel $h(t)$ satisfies the condition

$$\int_{-\infty}^{\infty} h(t) \, dt = h_0 = 1. \quad\quad\quad (29)$$

In this case also, there will be some reduction in the amount of computation.

One convolution kernel that is of interest is the *moving average* kernel defined by

$$h(t) = \frac{1}{|T|}\text{rect}\left(\frac{t}{T}\right) \quad\quad\quad (30)$$

where

$$\text{rect}\left(\frac{t}{T}\right) = \begin{cases} 1 & \text{for } \frac{-T}{2} \leq t \leq \frac{T}{2} \\ 0 & \text{otherwise.} \end{cases} \quad\quad\quad (31)$$

In this case, it can be shown that the moments of $h(t)$ are

$$h_m = \begin{cases} 0 & \text{for } m \text{ odd, and} \\ \frac{T^m}{(m+1)2^m} & \text{for } m \text{ even.} \end{cases} \quad\quad\quad (32)$$

10

Now, considering only up to $5^{th}$ order derivatives of the degraded signal (i.e. $N = 5$ in equations (16) and (17)) to be significant, the restored signal can be shown to be

$$f(t) = g(t) - \frac{T^2}{24}\frac{d^2}{dt^2}g(t) + \frac{7}{5760}T^4\frac{d^4}{dt^4}g(t). \qquad (33)$$

The above formula can be used to restore images degraded by uniform motion blur. For example, let $g(x,y)$ be a two-dimensional image obtained by photographing an object (e.g. a car) moving perpendicular to the optical axis of the photo taking camera. Without loss of generality, the $x$-axis of the image can be taken along the direction of motion of the object. Because the object is in motion, its image on the photographic film will also be in motion during the period when the film is being exposed by opening the shutter. This motion of the image of the object on the film causes the so called *motion blur* in the photograph. If $T$ is the distance by which the image of the object has moved on the film during the exposure period, then the relation between the blurred image $g(x,y)$ and the unblurred image $f(x,y)$ can be expressed as a convolution degradation given by

$g(x,y) = h(x,y) * f(x,y),$    (34)

where

$$h(x,y) = \frac{1}{|T|}\text{rect}\left(\frac{x}{T}\right). \qquad (35)$$

Here the convolution kernel $h(x,y)$ depends only on $x$ and not on $y$ according to equation (35). Therefore, the blurred image $g(x,y)$ can be restored to obtain an estimate of the unblurred image $f(x,y)$ by taking a weighted sum of partial derivatives of $g(x,y)$ with respect to $x$. In particular, if $6^{th}$ and higher order partial derivatives of $g(x,y)$ with respect to $x$ are all neglected, then the following equation for restoration which is very similar to equation (33) can be obtained:

$$f(x,y) = g(x,y) - \frac{T^2}{24}\frac{\partial^2}{\partial x^2}g(x,y) + \frac{7}{5760}T^4\frac{\partial^4}{\partial x^4}g(x,y). \qquad (36)$$

Another convolution kernel that is of interest is the Gaussian kernel defined by

$$h(t) = \frac{1}{\sqrt{2\pi}\sigma}e^{-\frac{t^2}{2\sigma^2}}. \qquad (37)$$

In this case, it can be shown that the moments of $h(t)$ are

$$h_m = \begin{cases} 0 & \text{for } m \text{ odd, and} \\ 1 \cdot 3 \cdot 5 \cdot \ldots \cdot (m-1) \cdot \sigma^m & \text{for } m \text{ even.} \end{cases} \qquad (38)$$

Again, considering only up to $5^{th}$ order derivatives of the degraded signal $g(t)$ to be significant (i.e. $N = 5$ in equations (16) and (17)), the restored signal can be shown to be

$$f = g - \frac{\sigma^2}{2}\frac{d^2g}{dt^2} + \frac{\sigma^4}{8}\frac{d^4g}{dt^4}. \qquad (39)$$

The following observations can be made from the above examples. The restored value of a degraded signal depends on the choice of the parameter $N$. Typical values would be between 2 and 4. In most cases values up to 6 should suffice. The optimal value for $N$ depends on the nature of the underlying signal $f(t)$ such as its bandwidth and also on the amount of noise in the degraded signal $g(t)$. The value of the restored signal at any point $t$ depends on the local characteristics (i.e. derivatives) of the degraded signal $g(t)$ around $t$ and the global characteristics (i.e. moments) of the impulse response function $h(t)$. Therefore, the method of the present invention can be adapted to a case where the convolution kernel $h(t)$ gradually changes with time $t$. This is accomplished by gradually changing with time $t$ the moment parameters $h_n$ used in the computation of the weight parameters $w_n$. In comparison, it is difficult to adapt classical restoration techniques to such a case.

The highest order moment that is needed to restore the signal in the present method is $h_N$. The value of $N$ can be increased as more information becomes available about the convolution kernel $h(t)$ in the form of its higher order moments. With increasing $N$ and improvement in the signal-to-noise ratio of the degraded signal $g(t)$, the quality of the restored signal can be improved.

Gradual changes in the noise characteristics with time can be dealt with by correspondingly changing the characteristics of the noise reduction filter.

### 6 Restoration of Two-Dimensional Signals

The method of the present invention can be used to restore two-dimensional convolution degraded signals, such as blurred images produced by a defocused camera system. For convenience, a two-dimensional signal will be referred to as an *image*.

A convolution degraded image will be denoted by $g(x,y)$ where $x$ and $y$ are independent variables which together specify points in a Cartesian coordinate system. The convolution kernel will be denoted by $h(x,y)$ and the original uncorrupted image will be denoted by $f(x,y)$. Therefore we have

$$g(x,y) = h(x,y) * f(x,y). \qquad (10)$$

The following notation will be used to represent partial derivatives of $g(x,y)$, $f(x,y)$, and the moments of $h(x,y)$:

$$g^{m,n} = \frac{\partial^m}{\partial x^m} \frac{\partial^n}{\partial y^n} g(x,y) \qquad (41)$$

$$f^{m,n} = \frac{\partial^m}{\partial x^m} \frac{\partial^n}{\partial y^n} f(x,y) \qquad (42)$$

$$h_{m,n} = \int_{-\infty}^{\infty} \int_{-\infty}^{\infty} x^m y^n h(x,y) dx dy \qquad (43)$$
$$\text{for } m, n = 0, 1, 2, \ldots$$

Using the above notation, the following convolution formula can be derived for the two-dimensional case:

$$g(x,y) = \sum_{k=0}^{\infty} \frac{(-1)^k}{k!} \sum_{i=0}^{k} \binom{k}{i} h_{i,k-i} f^{i,k-i} \qquad (44)$$

where

12

$$\begin{pmatrix} k \\ i \end{pmatrix}$$

denotes the binomial coefficient defined by

$$\begin{pmatrix} k \\ i \end{pmatrix} = \frac{k!}{i!(k-i)!}. \tag{45}$$

This formula can be derived by a method which is very similar to the method of deriving the one-dimensional convolution formula given by equation (14). Therefore, this derivation will not be elaborated here.

Taking all partial derivatives of $f(x,y)$ of order greater than $N$ to be zero, i.e. taking

$$f^{m,n} = 0 \text{ for } m + n > N, \tag{46}$$

the two-dimensional convolution formula can be written as

$$g(x,y) = \sum_{k=0}^{N} \frac{(-1)^k}{k!} \sum_{i=0}^{k} \begin{pmatrix} k \\ i \end{pmatrix} h_{i,k-i} f^{i,k-i}. \tag{47}$$

From this formula, following the method for the one-dimensional case, we can derive

$$f^{m,n} = \frac{1}{h_{0,0}} \left[ g^{m,n} - \sum_{k=1}^{N-(m+n)} \frac{(-1)^k}{k!} \sum_{i=0}^{k} \begin{pmatrix} k \\ i \end{pmatrix} h_{i,k-i} f^{i+m,k-i+n} \right] \tag{48}$$

for $m = 0,1,2,...$ and $n = 0,1,2,...$, but not $(m = n = 0)$.

Now, as in the case of one-dimensional signals, equation (48) can be used to derive an equation of the form

$$f(x,y) = \sum_{k=0}^{N} \sum_{i=0}^{k} w_{i,k-i} g^{i,k-i} \tag{49}$$

which is similar to equation (20) for the one-dimensional case. In the above equation, $w_{i,k-i}$, $i = 0,1,2,...,$ $k$ for $k = 0,1,2,...,$ $N$ are weight parameters dependent on the moment parameters $h_{i,k-i}$. Therefore, the method of the present invention consists of first computing the derivatives $g^{i,k-i}$ of the degraded signal $g$-$(x,y)$, then computing all the weight parameters $w_{i,k-i}$ using the moment parameters $h_{i,k-i}$ where $i = 0,1,2,...,$ $k$ for $k = 0,1,2,...,$ $N$, and then computing the right hand side of equation (49). Application of this formula will be illustrated with an example.

**6.1 Example**

Taking all partial derivatives of $f(x,y)$ of order greater than 2 to be zero, we get $N = 2$ in equation (48). Therefore we obtain

$$f^{0,0} = \frac{1}{h_{0,0}} \left[ g^{0,0} + f^{0,1}h_{0,1} + f^{1,0}h_{1,0} - \frac{1}{2!} \left( f^{0,2}h_{0,2} + 2f^{1,1}h_{1,1} + f^{2,0}h_{2,0} \right) \right] \qquad (50)$$

where

$$f^{0,2} = \frac{1}{h_{0,0}} g^{0,2}, \qquad (51)$$

$$f^{1,1} = \frac{1}{h_{0,0}} g^{1,1}, \qquad (52)$$

$$f^{2,0} = \frac{1}{h_{0,0}} g^{2,0}, \qquad (53)$$

$$f^{0,1} = \frac{1}{h_{0,0}} \left[ g^{0,1} + f^{0,2}h_{0,1} + f^{1,1}h_{1,0} \right]$$

$$= \frac{1}{h_{0,0}} \left[ g^{0,1} + \frac{h_{0,1}}{h_{0,0}} g^{0,2} + \frac{h_{1,0}}{h_{0,0}} g^{1,1} \right], \text{ and} \qquad (54)$$

$$f^{1,0} = \frac{1}{h_{0,0}} \left[ g^{1,0} + f^{1,1}h_{0,1} + f^{2,0}h_{1,0} \right]$$

$$= \frac{1}{h_{0,0}} \left[ g^{1,0} + \frac{h_{0,1}}{h_{0,0}} g^{1,1} + \frac{h_{1,0}}{h_{0,0}} g^{2,0} \right]. \qquad (55)$$

Substituting for $f^{0,2}$, $f^{1,1}$, $f^{2,0}$, $f^{0,1}$, $f^{1,0}$ from equations (51), (52), (53), (54), and (55) respectively into equation (50) and rearranging terms, we obtain

$$
\begin{aligned}
f^{0,0} = \ & w_{0,0}\, g^{0,0} + w_{0,1}\, g^{0,1} + w_{1,0}\, g^{1,0} + \\
& w_{0,2}\, g^{0,2} + w_{1,1}\, g^{1,1} + w_{2,0}\, g^{2,0}
\end{aligned}
\qquad (56)
$$

where

$$w_{0,0} = \frac{1}{h_{0,0}}, \qquad (57)$$

$$w_{0,1} = \frac{h_{0,1}}{h_{0,0}^2}, \qquad (58)$$

$$w_{1,0} = \frac{h_{1,0}}{h_{0,0}^2}, \qquad (59)$$

$$w_{0,2} = \frac{h_{0,1}^2}{h_{0,0}^3} - \frac{h_{0,2}}{2h_{0,0}^2}, \qquad (60)$$

$$w_{1,1} = \frac{h_{0,1}h_{1,0}}{h_{0,0}^3} - \frac{h_{1,1}}{h_{0,0}^2}, \text{ and} \qquad (61)$$

$$w_{2,0} = \frac{h_{1,0}^2}{h_{0,0}^3} - \frac{h_{2,0}}{2h_{0,0}^2}. \qquad (62)$$

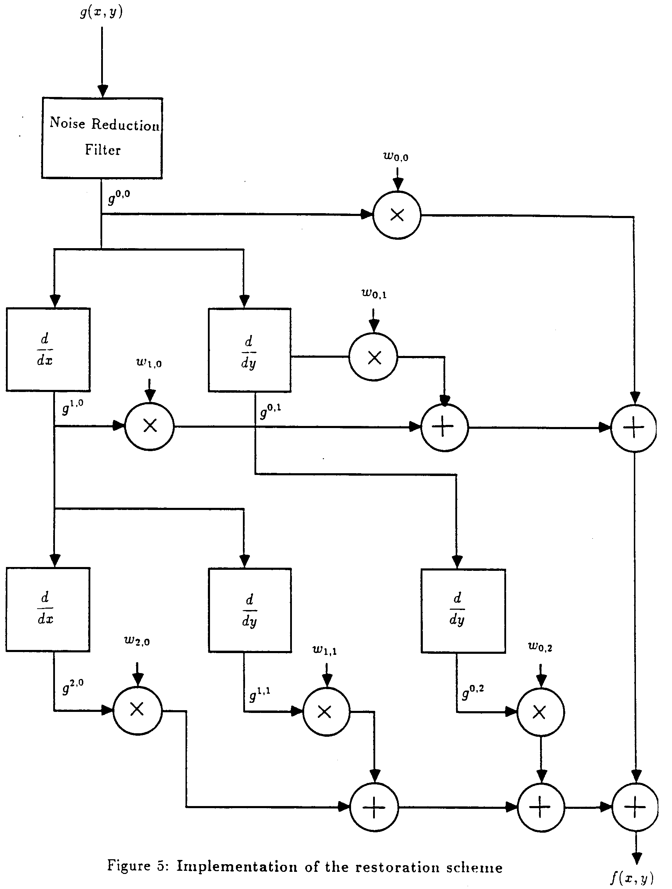

From equations (56) to (62), we see that a two-dimensional convolution degraded signal can be restored by

14

taking a weighted sum of the partial derivatives of the degraded signals where the weights depend on the moments of the convolution kernel. An apparatus implementing this restoration scheme is shown in Figure 5.

## 6.2 Example

One particular application that is of interest is the restoration of images which are blurred by camera misfocus. In this case, the convolution kernel is

$$h(x,y) = \begin{cases} \frac{1}{\pi \triangle^2} & \text{for } x^2 + y^2 \leq \triangle^2 \\ 0 & \text{otherwise.} \end{cases} \tag{63}$$

This kernel is illustrated in Figure 9. Here, the convolution kernel $h(x,y)$ has a constant value of

$$\frac{1}{\pi \triangle^2}$$

inside a circular region of radius $\triangle$ centered at the origin. This kernel is sometimes referred to as a *cylindrical* or *pill-box* kernel. This kernel is symmetric around the origin, i.e. it is circularly symmetric. For any function $h'(x,y)$ which is circularly symmetric, it can be shown that all odd moments of the function are zero, i.e.

$h'_{m,n} = 0$ for ($m$ odd) or ($n$ odd). (64)

Consequently, all odd moments of $h(x,y)$ in equation (63) are zero. Therefore $h_{m,n} = 0$ if $m$ is odd or $n$ is odd. For even moments, it can be shown that

$$h_{2p,2q} = \begin{cases} 1 & \text{if } (p = 0) \wedge (q = 0) \\ \frac{\triangle^{2q}}{2^{2q-2}} \frac{(2q-1)!}{q!(q-1)!(2q+2)} & \text{for } (p = 0) \wedge (q \geq 1) \\ \frac{\triangle^{2p}}{2^{2p-2}} \frac{(2p-1)!}{p!(p-1)!(2p+2)} & \text{for } (p \geq 1) \wedge (q = 0) \\ \frac{\triangle^{2p+2q}}{2^{2p+2q-3}} \frac{(2p-1)!(2q-1)!}{(p+q)!(p-1)!(q-1)!(2p+2q+2)} & \text{for } (p \geq 1) \wedge (q \geq 1). \end{cases} \tag{65}$$

Taking all partial derivatives of $f(x,y)$ of order greater than 5 to be zero, i.e. $f^{m,n} = 0$ for $m + n > 5$, the following restoration formula can be derived:

$f^{0,0} = w_{0,0}g^{0,0} + w_{0,2}g^{0,2} + w_{2,0}g^{2,0} + w_{0,4}g^{0,4} + w_{2,2}g^{2,2} + w_{4,0}g^{4,0}$ (66)

where

$$\begin{aligned} w_{0,0} &= 1, \\ w_{0,2} &= w_{2,0} = \frac{-\triangle^2}{8}, \\ w_{0,4} &= w_{4,0} = \frac{1}{2}w_{2,2} = \frac{\triangle^4}{96}. \end{aligned} \tag{67}$$

Another case that is of interest is when the convolution kernel is a two-dimensional Gaussian given by

$$h(x,y) = \frac{1}{2\pi\sigma^2}e^{-\frac{1}{2}\frac{x^2+y^2}{\sigma^2}}. \tag{68}$$

This kernel is also circularly symmetric. Therefore, $h_{m,n} = 0$ if $m$ is odd or $n$ is odd (or both $m$ and $n$ are odd). The even moments of the kernel are given by

$$h_{2p,2q} = \begin{cases} 1 & \text{if } (p=0)\wedge(q=0) \\ \frac{\sigma^{2q}}{2^{q-1}}\frac{(2q-1)!}{(q-1)!} & \text{for } (p=0)\wedge(q\geq 1) \\ \frac{\sigma^{2p}}{2^{p-1}}\frac{(2p-1)!}{(p-1)!} & \text{for } (p\geq 1)\wedge(q=0) \\ \frac{\sigma^{2p+2q}}{2^{p+q-2}}\frac{(2p-1)!(2q-1)!}{(p-1)!(q-1)!} & \text{for } (p\geq 1)\wedge(q\geq 1). \end{cases} \tag{69}$$

### 7 Restoration of Multi-Dimensional Signals

As mentioned earlier, the method of the present invention can be used to restore signals of any dimensionality. Here the restoration method will be briefly summarized for an $n$-dimensional signal where $n$ is any positive integer. For the sake of convenience, the notation $\chi_i$ will be used to denote $n$ variables $(\chi_1,\chi_2,\chi_3,...,\chi_n)$. For example $f(\chi_i)$ represents a function $f$ of $n$ variables, i.e. $f(\chi_1,\chi_2,\chi_3,...,\chi_n)$. The convolution degraded signal is denoted by $g(\chi_i)$, the convolution kernel by $h(\chi_i)$, and the original uncorrupted signal by $f(\chi_i)$. The partial derivatives of $g(\chi_i)$ are denoted by

$$g_{i_1,i_2,...,i_p} = \frac{\partial}{\partial x_{i_1}}\frac{\partial}{\partial x_{i_2}}...\frac{\partial}{\partial x_{i_p}}g(x_i) \tag{70}$$

where $i_k = 1,2,...,n$ for $k = 1,2,...,p$. A similar notation is used for the partial derivatives of $f(\chi_i)$.

The moments of the convolution kernel are denoted by

$$h_{i_1,i_2,...,i_p} = \int_{-\infty}^{\infty}d\alpha_{i_1}\int_{-\infty}^{\infty}d\alpha_{i_2}...\int_{-\infty}^{\infty}d\alpha_{i_p}\,\alpha_{i_1}\alpha_{i_2}...\alpha_{i_p}\,h(\alpha_i) \tag{71}$$

where $i_k = 1,2,...,n$ for $k = 1,2,...,p$.

Einstein's notation for summation can be used (i.e. summation is implied over repeated indices) to express the Taylor series expansion of $f(\chi_i - \alpha_i)$ around the point $\chi_i$ as

$$\begin{aligned} f(x_i - \alpha_i) &= f(x_i) + (-\alpha_{i_1})f_{i_1} \\ &\quad + \frac{1}{2!}(-\alpha_{i_1})(-\alpha_{i_2})f_{i_1,i_2} \\ &\quad + \frac{1}{3!}(-\alpha_{i_1})(-\alpha_{i_2})(-\alpha_{i_3})f_{i_1,i_2,i_3} \\ &\quad + ... \\ &\quad ... \\ &\quad + \frac{1}{n!}\left[\prod_{k=1}^{n}(-\alpha_{i_k})\right]f_{i_1,i_2,...,i_n} \\ &\quad + ... \end{aligned} \tag{72}$$

Taking all partial derivatives of $f(\chi_i)$ of order greater than $N$ to be zero, i.e. taking $f_{i1,i2,\ldots,ip} = 0$ for $p > N$, the following equations can be derived:

$$f(x_i) \;=\; \frac{1}{h_0}\left[g(x_i) - \sum_{k=1}^{N}\frac{(-1)^k}{k!}h_{i_1,i_2,\ldots,i_k}\,f_{i_1,i_2,\ldots,i_k}\right] \qquad (73)$$

$$f_{j_1,j_2,\ldots,j_p} \;=\; \frac{1}{h_0}\left[g_{j_1,j_2,\ldots,j_p} - \sum_{k=1}^{N-p}\frac{(-1)^k}{k!}h_{i_1,i_2,\ldots,i_k}\,f_{i_1,i_2,\ldots,i_k,j_1,j_2,\ldots,j_p}\right]. \qquad (74)$$

Equation (74) can be used to substitute for the partial derivatives of $f(\chi_i)$ in equation (73) in a recursive manner to express $f(\chi_i)$ solely in terms of the partial derivatives of $g(\chi_i)$. The resulting equation will be of the form

$$f(x_i) = \sum_{k=0}^{N} w_{i_1,i_2,\ldots,i_k}\,g_{i_1,i_2,\ldots,i_k} \qquad (75)$$

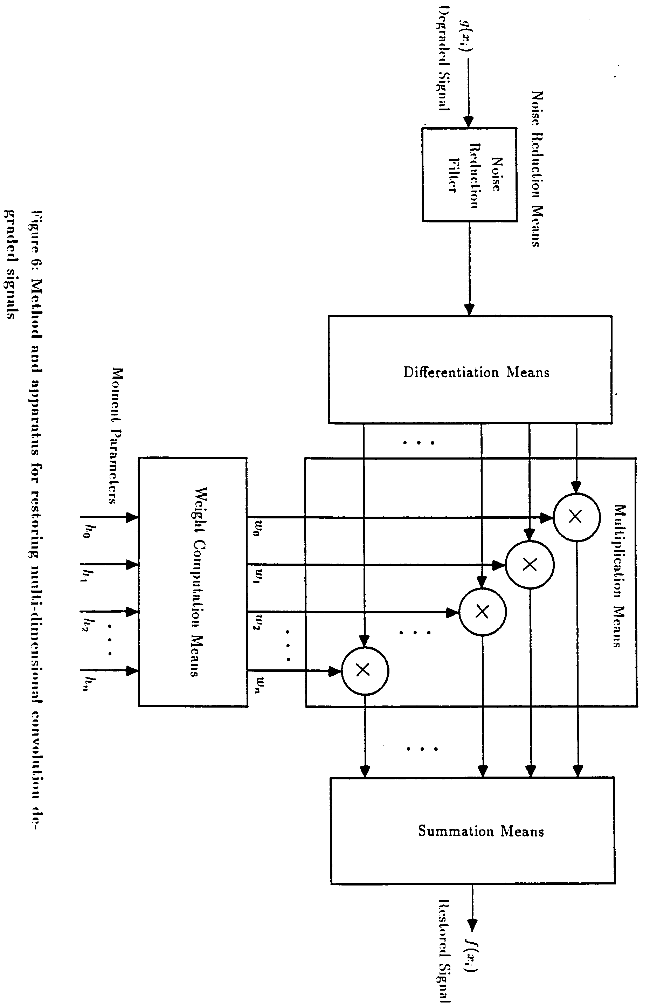

where $W_{i1,i2,\ldots,ik}$ are weight parameters which depend on the moment parameters $h_{i1,i2,\ldots,ik}$. The above equation again expresses the original signal $f(\chi_i)$ as the weighted sum of the partial derivatives of $g(\chi_i)$ where the weights depend on the moments of the convolution kernel $h(\chi_i)$. Therefore, the method and apparatus in this case are similar to those of the one-dimensional and two-dimensional signals. The apparatus for this case is shown in Figure 6.

**8 Conclusion**

A method and apparatus are described for the restoration of convolution degraded signals. The application of this invention to one-dimensional and two-dimensional signals are explained with examples.

While the description in this report of the method, apparatus, and applications contain many specificities, these should not be construed as limitations on the scope of the invention, but rather as exemplifications of preferred embodiments thereof. Further modifications and extensions of the present invention herein disclosed will occur to persons skilled in the art to which the present invention pertains, and all such modifications are deemed to be within the scope and spirit of the present invention as defined by the appended claims and their equivalents thereof.

**9 Acknowledgements**

The help of Mr. Sanjay Sethi in preparing this application is gratefully acknowledged, as is the cooperation of my wife in making this work possible.

**Claims**

1. A method of restoring a degraded signal, said degraded signal being the result of convolving an original signal with an impulse response function, said impulse response function characterized by a set of moment parameters, said method comprising :

(a) providing said degraded signal to a set of differentiators, said differentiators providing as output a set of derivative signals in response to said degraded signal and corresponding thereto,

(b) supplying said set of moment parameters to a weight computation means, said weight computation means providing as output a set of weight parameters, each weight parameter corresponding to one of said set of derivative signals,

(c) transmitting said weight parameters and said set of derivative signals to a multiplication means for multiplying each of said set of derivative signals with a corresponding weight parameter, whereby a set of weighted derivative signals is provided as output by the multiplication means in response thereto, and

(d) supplying said set of weighted derivative signals to a summation means for summing at least two signals of said set of weighted derivative signals, whereby said original signal is generated as output

17

by said summation means.

2. The method of Claim 1 wherein said degraded signal is first passed through a noise reduction filter before further processing according to steps (a) through (d).

3. The method of Claim 1 wherein said degraded signal is a two-dimensional image.

4. The method of Claim 1 wherein said impulse response function is a Gaussian function.

5. The method of Claim 1 wherein said impulse response function is a constant inside a region of specified shape and is zero outside of said region.

6. The method of Claim 1 wherein said degraded signal is a one-dimensional signal.

7. The method of Claim 1 wherein said degraded signal is a digital signal.

8. The method of Claim 3 wherein said impulse response function is a two-dimensional cylindrical or *pill-box* shaped function which is constant inside a circular region and zero outside of said circular region.

9. The method of Claim 3 wherein said two-dimensional image is a digital image.

10. Apparatus for restoring a degraded signal, said degraded signal being the result of convolving an original signal with an impulse response function, said impulse response function characterized by a set of moment parameters, said apparatus comprising:
    (a) a differentiation means for computing derivatives of said degraded signal to obtain a set of derivative signals;
    (b) a weight computation means for taking said set of moment parameters as input and computing a weight parameter corresponding to each member of said set of derivative signals;
    (c) a multiplication means for multiplying each member of said set of derivative signals with its corresponding weight parameter to obtain a set of weighted derivatives; and
    (d) a summation means for summing at least two members of said set of weighted derivatives to obtain a restored signal.

11. The apparatus of Claim 10 wherein computing means are electronic digital devices.

12. The apparatus of Claim 10 which further includes a noise reduction means.

Figure 1: Method and apparatus for restoring one-dimensional convolution de-graded signals

Figure 2: **An example of the method and apparatus for the restoration of one-dimensional convolution degraded signals**

$$g(t) \longrightarrow R_0 \longrightarrow C \longrightarrow A \longrightarrow -CR\frac{d}{dt}g(t)$$

A is a high gain amplifier and $R_0$ is a small resistor

Figure 3: **Analog differentiation unit**

$$g[n] \longrightarrow + \longrightarrow g[n] - g[n-1]$$

One element delay unit $\quad g[n-1] \quad$ Inverter $\quad -g[n-1]$

Figure 4: **Digital differentiation unit**

$g(x, y)$

Noise Reduction Filter

$g^{0,0}$

$w_{0,0}$

$\times$

$\dfrac{d}{dx}$

$\dfrac{d}{dy}$

$w_{0,1}$

$\times$

$w_{1,0}$

$g^{1,0}$

$\times$

$g^{0,1}$

$+$

$+$

$\dfrac{d}{dx}$

$\dfrac{d}{dy}$

$\dfrac{d}{dy}$

$w_{2,0}$

$g^{2,0}$

$\times$

$w_{1,1}$

$g^{1,1}$

$\times$

$w_{0,2}$

$g^{0,2}$

$\times$

$+$

$+$

$+$

$f(x, y)$

Figure 5: Implementation of the restoration scheme

Figure 6: Method and apparatus for restoring multi-dimensional convolution degraded signals

Figure 7: **Classical signal degradation model**

Figure 8: **Classical solution to the classical signal restoration problem**

Figure 9: The impulse response function of a misfocused camera with a circular aperture